# EUROPEAN PATENT APPLICATION

(11) **EP 4 534 838 A1**
(43) Date of publication of application: **09.04.2025**
(21) Application number: 23383015.7
(22) Date of filing: 03.10.2023
(51) Int. Cl.: F03D 9/10, F03D 9/11, F03D 9/25, F03D 7/02

(54) **WIND TURBINE SYSTEMS WITH EXTERNAL POWER SUPPLIES AND METHODS**

(71) Applicant: General Electric Renovables España S.L., 08005 Barcelona (ES)
(72) Inventor: PALOMARES RENTERO, Pedro, 08005 Barcelona (ES); ACCION, Sergio, 08005 Barcelona (ES); ARTEAGA, Oneida, 08005 Barcelona (ES); WALASZEK, Karolina, 51-572 Kraków (PL)
(74) Representative: Bardehle Pagenberg S.L.

(57) **Abstract**

The present disclosure relates to wind turbines systems comprising a main power supply line for supplying power to wind turbine components, an internal back-up power supply and a first converter configured to convert power from the internal back-up power supply and provide power to the main power supply line. The wind turbine systems further comprise an external power supply configured to provide power to the main power supply line, and an external power supply switch arranged between the external power supply and the main power supply line. The external power supply is further configured to provide power to the internal back-up power supply. The present disclosure also relates to methods for providing power supply to a main power supply line of a wind turbine system.

## Description

### FIELD

The present disclosure relates to wind turbine systems comprising back-up power supplies, and particularly to wind turbine systems comprising external power supplies. The present disclosure also relates to methods for providing power supply to wind turbine components.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

A wind turbine generally comprises auxiliary systems such as pitch control systems, ventilation and temperature regulation systems, communication systems, oil pump systems and others which require electrical power for operating. The power for operating these systems may generally be obtained from the electrical grid.

If a grid loss occurs, i.e. if the wind turbine is for any reason prevented from obtaining power from the electrical grid and supplying power to the grid, some of the electrical systems of the wind turbine may stop working. In order to be able to extend the operation of at least some auxiliary systems of the wind turbine when the grid is unavailable, it is known to provide one or more energy storage and/or energy supply devices. For example, it is known to use batteries or ultracapacitors as internal back-up power supplies, and/or a diesel generator or solar panels as an external power supply.

In order to keep critical auxiliary systems operative for longer periods of time, a large number of power supply/storage devices and/or relatively large energy supply/storage devices may be required.

Also, during commissioning of a wind turbine, especially for offshore wind turbines, the power grid may be unavailable, and one or more energy storage and/or energy supply devices may be used to act as a power source and provide power to the various auxiliary systems of the wind turbine which are involved with commissioning. Particularly, the storage devices used for supplying back-up power to the wind turbine yaw systems may be used for carrying out commissioning tasks, while diesel generators may be used to replenish the back-up power supply or, when necessary, supply power to the auxiliary power systems.

Diesel generators need to have a large size in order to reach the demands of the auxiliary systems of the wind turbine. Diesel generators used in wind turbines usually have a size of > 100kVA and are extremely challenging and expensive to transport and install, especially for offshore wind turbines.

The present disclosure provides methods and devices to at least partially overcome some of the aforementioned drawbacks.

### SUMMARY

In an aspect of the present disclosure, a wind turbine system is provided. The wind turbine system comprises a main power supply line for supplying power to wind turbine components, an internal back-up power supply and a first converter configured to convert power from the internal back-up power supply and provide power to the main power supply line. The wind turbine system further comprises an external power supply configured to provide power to the main power supply line and an external power supply switch arranged between the external power supply and the main power supply line. The external power supply is further configured to provide power to the internal back-up power supply.

According to this aspect, the internal back-up power supply may be used to meet power demands from the main power supply line, and the external power supply may be used simultaneously to charge the internal back-up power supply, allowing an optimization of the available energy. The nominal power storage in the internal back-up power supply may be reduced, because it can be replenished as needed. Also, commissioning time of a wind turbine or wind farm can be reduced, since commissioning tasks requiring power can be scheduled without the need to interrupt. A reduction of the size of the external power supply may be possible, reducing its cost. It may even be possible to use of a small renewable power source, e.g. solar panels instead of a diesel generator.

Throughout this disclosure, an internal back-up power supply may refer to systems or devices provided in a wind turbine and configured at least in part store electrical energy which can be supplied to certain components of the wind turbine for powering them, for example if the electrical grid is not available. UPS's incorporating batteries or ultracapacitors may be used. Terms such as auxiliary power sources, stored energy sources and energy storage devices/systems may be used interchangeably herein.

Throughout the present disclosure, supplying power to wind turbine components may be understood as supplying electrical power to auxiliary systems in the wind turbine which require electrical power for operating.

In another aspect of the present disclosure, a method for providing power to components of a wind turbine is provided. The method comprises supplying power to a main power supply line connected to the components of the wind turbine with an internal back-up power supply; and simultaneously charging the internal back-up power supply with an external power supply.

In a further aspect, a back-up power supply system for a wind turbine is provided. The back-up power supply system comprises an internal back-up power supply arranged in the wind turbine; and an external power supply, wherein the external power supply is configured to charge the internal back-up power supply while the internal back-up power supply is supplying power to the wind turbine to power wind turbine components.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 schematically illustrates an example of a wind turbine system according to the present disclosure.
Figure 4 shows a flowchart of an example of a method for providing power supply to a main power supply line of a wind turbine.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

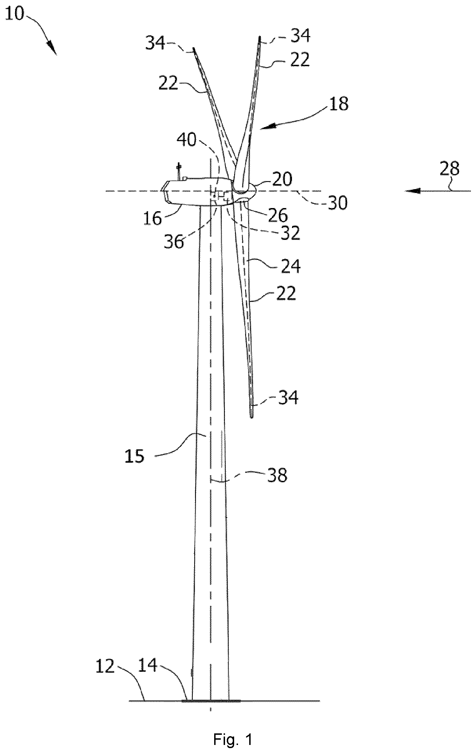

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

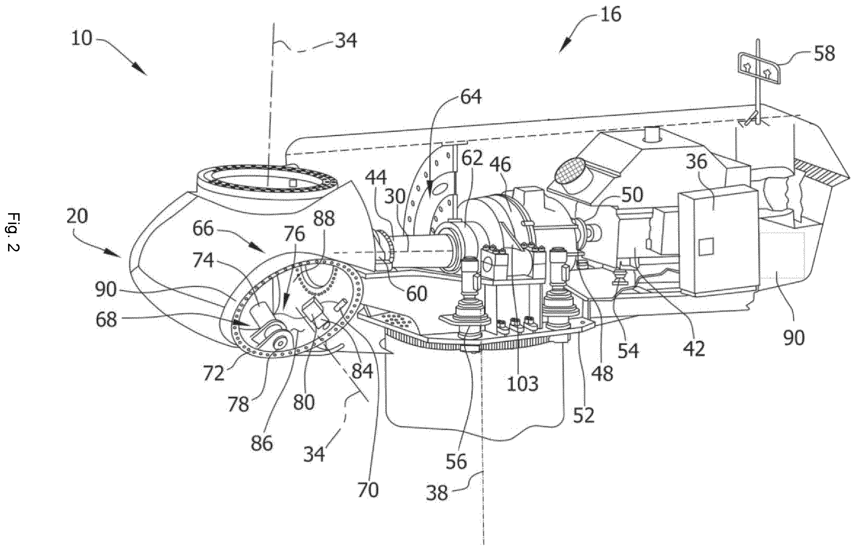

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage, e.g. 10 - 35 KV. Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, main frame 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies power to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

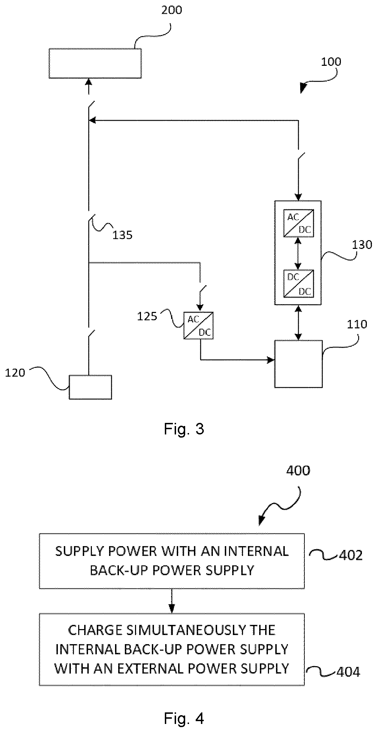

Figure 3 schematically represents a wind turbine system according to an example of the present disclosure. The wind turbine system comprises a main power supply line 200 for supplying power to wind turbine components, an internal back-up power supply 110 and a first converter 130, configured to convert power from the internal back-up power supply 110 and provide power to the main power supply line 200.

The wind turbine system further comprises an external power supply 120 configured to provide power to the main power supply line 200, and an external power supply switch 135 arranged between the external power supply 120 and the main power supply line 200. The external power supply 120 is further configured to provide power to the internal back-up power supply 110.

The wind turbine system allows charging the internal back-up power supply while it is supplying power to the main power supply line. The power available in the internal back-up power supply for carrying out specific tasks or supplying specific components is not limited to its storage level at a given moment, as the batteries and/or ultracapacitors in the internal back-up power supply can be charged and replenished during their use. The external power supply may not be used to reach a peak power and an external power supply with reduced power capacity may be used, allowing to drastically reduce the size of the external power supply, saving costs and time.

The arrows in figure 3 represent the direction in which power may be supplied. As schematically shown in the example of figure 3, the wind turbine system may be arranged such that the main power supply line 200 receives power from the internal back-up power supply 110 and/or from the external power supply 120. The main power supply line 200 may supply the power received to different auxiliary systems in the wind turbine e.g. the control and communication systems, the ventilation system, etc.

In addition, the external power supply 120 is connected to the internal back-up power supply 110 such that it can supply power to the internal back-up power supply 110.

The internal back-up power supply 110 may comprise one or more batteries and/or ultracapacitors which, depending on the requirements of the electrical system of the wind turbine, may be charged or discharged. In some examples, the internal back-up power supply 110 may have a power capacity which may be equal to or greater than a maximum consumption of the wind turbine's most essential auxiliary systems. In some examples, the internal back-up power supply 110 may have a nominal power of 50 - 180 KVA. In some examples, the internal back-up power supply 110 may be configured to provide back-up power to a yaw system of a wind turbine.

The internal back-up power supply 110 may be arranged in the wind turbine or in any suitable location with respect to the wind turbine 10. In some examples, one or more internal back-up power supplies may be placed within a nacelle 16. In figure 2, an internal back-up power supply 110, also referred to as power generator 84, is shown for the pitch system 32 of a blade 22. It should be understood that in other examples, such internal back-up power supply 110 may be placed in other locations e.g. in the tower, at or near the base of the tower, in a transition piece and other. It should also be understood that further internal back-up power supplies 110 may also be provided in the example of figure 2 or in other examples. An internal back-up power supply 110 may also be arranged within a wind farm such that it may supply electric power to more than one wind turbine 10.

Further, the internal back-up power supply 110 is connected to the main power supply line 200 through a first converter 130 configured to convert power supply and provide power to the main power supply line 200.

In the example shown in figure 3, the first converter 130 may include a rectifier stage and an inverter stage. In the rectifier stage, an electric power converter may convert direct current (DC) power from the internal back-up power supply 110 from a voltage level to another voltage level. In the inverter stage, another converter may then convert the direct current (DC) power to alternating current (AC) power and may feed it to the main power supply line 200 at the appropriate voltage and frequency.

In some examples, the internal back-up power supply 110 may be charged by the main power supply line 200 or by the external power supply 120.

The generator 42 of the wind turbine produces AC power of variable frequency due to varying wind conditions. During normal operation of the wind turbine, AC power produced from the wind turbine generator 42 may be used to charge the internal back-up power supply 110 and power may be supplied from the main power supply line 200 of the wind turbine to the internal back-up power supply 110. Therefore, the first converter 130 may also be configured to adjust the power output from the generator 42 to one suitable for the internal back-up power supply 110, e.g. to a DC power having a certain fixed frequency.

The external power supply 120 may be located in an external part of the wind turbine. The external power supply 120 may have a power which is lower than the power supplied by the main power supply line. It may be mainly used to maintain a positive energy balance in the internal back-up power supply 110, and its nominal power may not need to be equal to or greater than a maximum consumption of the critical electrical systems of the wind turbine i.e. the electrical systems which are powered by the internal back-up power supply.

Accordingly, the external power supply 120 may comprise a much smaller size than the ones used in the art. An external power supply with reduced size may provide significant cost reductions, as all the steps concerning its transportation and installation may be possible to perform without the use of costly resources e.g. big cranes. In some examples, the external power supply may have a power of 20 - 55 kWA. In some examples, the external power supply may supply from 12 - 15 amperes (A) to the internal back-up power supply 110.

In some examples, the external power supply 120 may be an engine generator, in particular a diesel generator. In other examples, the external power supply 120 may be a renewable power source, e.g. one or more solar panels.

As shown in figure 3, an external power supply switch 135 is arranged between the external power supply 120 and the main power supply line 200. The switch may regulate the connection between the main power supply line 200 and the external power supply 120 and may provide two alternative ways for directing the power. In some examples, or during some time periods, the external power supply switch 135 allows supplying power from the external power supply 120 to the main power supply line 200. In other examples, or during other time periods, the external power supply switch 135 may be positioned such that power produced from the external power supply 120 is directed towards the internal back-up power supply 110.

Accordingly, the power produced in the external power supply 120 may be directly supplied to the main power supply line 200 or may be used to charge the internal back-up power supply 110.

The wind turbine system may comprise a second converter 125 to convert the power supplied to the internal back-up power supply by the external power supply. In some examples, the wind turbine system may comprise a unidirectional AC/DC converter module 125 connecting the external power supply 120 and the internal back-up power supply 110, such that the AC power produced in the external power supply 120 may be converted to DC power and may be used to charge the internal back-up power supply 110.

In some examples, the external power supply 120 may be configured to adapt the power supplied to the internal back-up power supply 110. The external power supply 120 may comprise a controller which may be configured to detect the power that the internal back-up power supply 110 is providing to the wind turbine main line 200 and adjust the amount of power which is produced by the external power supply 120. The amount of power supplied to the internal back-up power supply 110 may be adjusted such that the external power supply 120 does not produce more power than it is necessary.

Figure 4 shows a flowchart of a method for providing power to components of a wind turbine. The method comprises, at block 402, supplying power to a main power supply line 200 connected to the components of the wind turbine with an internal back-up power supply, and, at block 404, simultaneously charging the internal back-up power supply with an external power supply.

In some examples, the method may comprise receiving a power demand from the main power supply line 200, supplying power to the main power supply line 200 with the internal back-up power supply 110 to meet the power requirements; and charging the internal back-up power supply 110 with the external power supply 120 while the internal back-up power supply 110 is supplying power to the main power supply line 200.

In some examples, the power demand may be produced during commissioning of the wind turbine.

In other examples, the power demand may be produced in a grid loss event, where the wind turbine is disconnected from the grid.

When reference is made throughout this disclosure to the fact that a wind turbine is (electrically) disconnected from the grid, it may be understood that a wind turbine is prevented from supplying as well as obtaining electric power to/from the grid.

In some examples, the power supplied by the external power supply 120 may be the same as the power that is leaving the internal back-up power supply 110, such that the internal back-up power supply 110 remains fully charged after its use.

In other examples, the power supplied by the external power supply 120 to the internal back-up power supply 110 may be adapted to actual requirements of the internal back-up power supply 110.

The power supplied by the external power supply 120 to the internal back-up power supply 110 may be smaller than the power which is being supplied to the main power supply line 200 by the internal back-up power supply 110. The external power supply 120 may comprise a controller which may be able to determine the amount of power which the external power supply 120 needs to provide such that the power stored in the batteries and/or ultracapacitors of the internal back-up power supply 110 does not run out before the demand of power coming from the main power supply line 200 has been fulfilled.

In these examples, the external power supply 120 may reduce and adapt the power supplied to the internal back-up power supply 110 e.g. from 15 to 10 A if the controller detects that the internal back-up power supply 110 can be sufficiently charged without the external power supply 120 producing a nominal amount of power.

Therefore, the method allows to optimize the energy available in the internal back-up power supply by maintaining the charge of the internal back-up power supply using only the amount of power necessary while at the same time the internal back-up power supply provides power to the main power supply line e.g. during commissioning of the wind turbine or a grid loss event.

The requirements of the external power supply are reduced, since the peaks of power due to the power demand of the main power supply line can be met by the internal back-up power supply by itself. Thus, a smaller more manageable external power supply may be used in the wind turbine system.

In other examples, the method may comprise continuously charging the internal back-up power supply 110 with the external power supply 120. The external power supply may slowly charge the internal back-up power supply e.g. with 10 A until the latter is fully charged.

Even though the external power supply 120 may have been charging the internal back-up power supply 110 while it was providing power to the main power supply line 200, the internal back-up power supply 110 may not be at its highest power capacity after its use. In such cases, the external power supply 120 may continue supplying power to the internal back-up power supply. Therefore, in some examples, the method may comprise charging the internal back-up power supply 110 with the external power supply 120 when the internal back-up power supply 110 is not supplying power to the main power supply line 200.

In some examples, the energy present in the internal back-up power supply 110 may not be enough to cover the energy requirements of the main power supply line 200. The external power supply 120 may then be used to supply an extra power to the main power supply line 200. In these examples, the method may comprise receiving a power demand from the one main power supply line 200, and supplying power to the main power supply line 200 with the external power supply 120 and with the internal back-up power supply 110 to meet the power demand.

In other examples, the power produced by the external back-up supply may be enough to meet the requirements of the main power supply line 200.

In further examples, the method may further comprise supplying power to the main power supply line 200 with the external power supply 120 if the power demand can be supplied by the external power supply 120, and supplying power to the wind turbine with the internal back-up power supply 110 if the power demand cannot be supplied by the external power supply.

Power may be directly supplied by the external power supply 120 to the main power supply line 200 and the supply of power may be more efficient since unnecessary discharge of the internal back-up power supply 110 may be avoided.

In yet another aspect of the disclosure, a back-up power supply system 100 for a wind turbine is provided. The system 100 comprises an internal back-up power supply 110 arranged in the wind turbine and an external power supply 120. The external power supply is configured to charge the internal back-up power supply 110 while the internal back-up power supply 110 is supplying power to a main power supply line 200 of the wind turbine to power wind turbine components.

In some examples, the power of the external power supply 120 may be lower than the power of the main power supply line. In some examples, the external power supply 120 may have power of 20 - 55 kWA.

In some examples, the external power supply 120 from the internal back-up power supply system may be a diesel generator. In other examples, the external power supply 120 may be a renewable power source. In some examples, the external power supply 120 may comprise solar panels.

In some examples, the external power supply 120 may be comprise a power converter 125 to adapt a power supplied to the internal back-up power supply 110 by the external power supply 120.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine system comprising:
a main power supply line (200) for supplying power to wind turbine components;
an internal back-up power supply (110);
a first converter (130) configured to convert power from the internal back-up power supply (110) and provide power to the main power supply line (200);
an external power supply (120) configured to provide power to the main power supply line (200), and
an external power supply switch (135) arranged between the external power supply (120) and the main power supply line (200),
wherein the external power supply (120) is further configured to provide power to the internal back-up power supply (110).

2. The wind turbine system according to claim 1, wherein the external power supply (120) is an engine generator, particularly a diesel generator.

3. The wind turbine system according to claims 1 or 2, wherein the external power supply (120) comprises a renewable power source, particularly one or more solar panels.

4. The wind turbine system according to any of claims 1-3, wherein the internal back-up power supply (110) comprises one or more batteries and/or ultracapacitors.

5. The system according to any of claims 1 - 4, wherein the internal back-up power supply (110) is configured to provide back-up power to a yaw system of the wind turbine.

6. The wind turbine system according to any of claims 1 - 5, wherein a power of the external power supply (120) is lower than a power of the main power supply line, optionally wherein the external power supply has a power of 20 - 55 kWA.

7. The system according to any of claims 1-6, further comprising a second converter (125) to convert the power supplied to the internal back-up power supply (110) by the external power supply (120).

8. A method (400) for providing power to components of a wind turbine, wherein the method comprises:
supplying power (402) to a main power supply line (200) connected to the components of the wind turbine with an internal back-up power supply (110); and
simultaneously charging (404) the internal back-up power supply (110) with an external power supply (120).

9. The method (400) of claim 8, wherein the external power supply (120) is a diesel generator with a power lower than a power of the main power supply line, optionally with a power of 20 - 55 kWA.

10. The method (400) of claim 8 or 9, further comprising adapting the power supplied by the external power supply (120) to the internal back-up power supply (110) using a second converter.

11. The method (400) of claims 8 -10, further comprising continuously charging the internal back-up power supply (110) with the external power supply (120), and further comprising charging the internal back-up power supply (110) with the external power supply (120) when the internal back-up power supply (110) is not supplying power to the main power supply line (200).

12. The method (400) of claims 8 - 11, comprising:
receiving a power demand from the main power supply line (200);
supplying power to the main power supply line (200) with the internal back-up power supply (110) to meet the power demand; and
charging the internal back-up power supply (110) with the external power supply (120) while the internal back-up power supply (110) is supplying power to the main power supply line (200).

13. The method (400) of any of claims 8 - 11, further comprising:
receiving a power demand from the main power supply line (200); and
supplying power to the main power supply line (200) with the external power supply (120) and with the internal back-up power supply (110) to meet the power demand.

14. The method (400) of claim 12 or 13, wherein the power demand is produced during a grid loss event.

15. The method (400) of claim 12 or 13, wherein the power demand is produced during commissioning of the wind turbine.
